# EUROPÄISCHE PATENTSCHRIFT

(11) **EP 2 247 667 B1**
(45) Veröffentlichungstag und Bekanntmachung des Hinweises auf die Patenterteilung: **10.02.2016**
(21) Anmeldenummer: 09715712.7
(22) Anmeldetag: 14.02.2009
(51) Int. Cl.: C08L 71/00

(54) **VISKOELASTISCHER POLYURETHANSCHAUMSTOFF MIT RIZINUSÖL**
VISCOELASTIC POLYURETHANE FOAM CONTAINING CASTOR OIL
MOUSSE DE POLYURÉTHANE VISCOÉLASTIQUE À BASE D'HUILE DE RICIN

(30) Priorität: 27.02.2008 DE 102008011459; 13.03.2008 DE 102008014032
(43) Veröffentlichungstag der Anmeldung: 10.11.2010
(73) Patentinhaber: Covestro Deutschland AG, 51373 Leverkusen (DE)
(72) Erfinder: KLESCZEWSKI, Bert, 51069 Köln (DE); TRIOULEYRE, Sebastien, 51069 Köln (DE); GOSSNER, Matthäus, 51061 Köln (DE); MEYER-AHRENS, Sven, 51375 Leverkusen (DE); MOSBACH-ROSENBERGER, Alice, 51519 Odenthal (DE)
(74) Vertreter: Levpat
(86) Internationale Anmeldenummer: PCT/EP2009/001054
(87) Internationale Veröffentlichungsnummer: WO 2009/106240

(56) Entgegenhaltungen:
- EP-A- 0 826 706
- WO-A-2005/033167
- WO-A-2007/085548

## Beschreibung

Die vorliegende Erfindung betrifft nachwachsende Rohstoffe enthaltende Polyetherpolyol-Zusammensetzungen, ein Verfahren zur Herstellung viskoelastischer Polyurethanschäume unter Verwendung solcher Zusammensetzungen sowie entsprechend hergestellte viskoelastische Schaumstoffmaterialen und deren Verwendung.

Viskoelastische Schaumstoffe zeichnen sich durch eine langsame, graduelle Rückverformung nach einer erfolgten Kompression aus. Solche Materialien sind im Stand der Technik wohl bekannt und werden wegen ihrer Energie-absorbierenden Eigenschaften sehr geschätzt. Viskoelastische Schaumstoffmaterialien finden sich in einer Vielzahl von Anwendungsbereichen zur Polsterung (wie zum Beispiel in Kissen, Sitzbezügen, Matratzen usw.), als Schall- und/oder Vibrationsdämpfende Materialien oder auch als Aufprallschutz.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyolbeziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Bei der Herstellung von Polyurethanen werden gewöhnlich zwei oder mehrere Flüssigkeitsströme miteinander vereinigt. Die Mischung dieser Flüssigkeitsströme initiiert die Polymerisation und gegebenenfalls das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten Flüssigkeitsströmen handelt es sich in der Mehrzahl der Fälle auf der einen Seite um eine polyfunktionelle organische Isocyanatkomponente (welche auch oft als "A-Komponente" bezeichnet wird) und auf der anderen Seite um polyfunktionelle Monomere oder Harze, welche Isocyanaten gegenüber eine entsprechende Reaktivität aufweisen und gegebenenfalls weitere Hilfsstoffe enthalten können. Dieses Gemisch, welches vielfach als "B-Komponente" bezeichnet wird, umfasst typischerweise zum größten Teil eine oder mehrere Polyolkomponenten.

Um nun einen Polyurethanschaumstoff bestimmter Zusammensetzung zu erhalten, werden die oben beschriebenen Flüssigkeitsströme vor ihrer Vermischung entsprechend dosiert. Ein Aufschäumen wird dabei normalerweise so erreicht, dass der B-Komponente Wasser zugesetzt wird, welches mit dem Polyisocyanat der A-Komponente unter Bildung eines Amins und unter Freisetzung von CO₂ reagiert, welches wiederum als Treibgas fungiert. Alternativ oder zusätzlich zu der Verwendung von Wasser werden oft auch flüchtige inerte organische Verbindungen oder inerte Gase verwendet.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen (T_{G}) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA- ("dynamic mechanical analysis") Spektren solcher Materialien zeichnen sich üblicherweise durch einen relativ flachen Bereich ("modulus plateau") zwischen den verschiedenen Glasübergängen aus.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze.

In konventionellen Polyurethanen ordnen sich die harten (hohe Glasübergangstemperatur) und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien.

Viskoelastische Polyurethane stellen in diesem Zusammenhang gewissermaßen einen Spezialfall dar, bei welchen nämlich die oben beschriebene Phasentrennung nur unvollständig oder überhaupt nicht auftritt.

Von einer solchen "Struktur-Viskoelastizität" bei Polyurethanschäumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Durch die geringe Größe der Öffnungen strömt die Luft nach einer Kompression nur langsam wieder ein, was eine verlangsamte Rückverformung zur Folge hat.

Beispiele für solche auf einem pneumatischen Effekt beruhenden viskoelastischen Schaumstoff sind die im Handel erhältlichen Produkte Cosypur^{®} und Elastoflex^{®} der Elastogran GmbH.

Zur Synthese von Polyurethanschäumen mit Struktur-Viskoelastizität sind im Stand der Technik schon viele Verfahren beschrieben worden, deren gemeinsames Merkmal meistens die Verwendung einer speziellen Polyetherpolyol-Zusammensetzung neben einer mehr oder weniger frei wählbaren Isocyanatkomponente ist.

Solche Polyetherpolyole sind dabei üblicherweise das Produkt der Polymerisation von Epoxiden, wie Ethylenoxid (EO), Propylenoxid (PO), Butylenoxid, Styroloxid oder Epichlorhydrin mit sich selbst oder durch Anlagerung dieser Epoxide, gegebenenfalls im Gemisch oder nach einander, an Startkomponenten mit reaktionsfähigen Wasserstoffatomen, wie Wasser, Alkohole, Ammoniak oder Aminen. Derartige "Starter-Moleküle" weisen dabei in der Regel eine Funktionalität von 1 bis 6 auf. In Abhängigkeit von der Verfahrensführung kann es sich bei diesen Polyetherpolyolen um Homopolymere, Blockcopolymere, "random"-Copolymere, "capped"-Polymere oder um Polymere handeln, welche mit einer Mischung verschiedener Epoxide ge-"tipped" sind. Um solche Polyetherpolyole genauer zu spezifizieren, haben sich im Stand der Technik verschiedene Kenngrößen herauskristallisiert:
i.) Die Hydroxyl-Funktionalität, welche vom Starter-Molekül abhängt, auf dem aufbauend das Polyetherpolyol synthetisiert wird;
ii.) die Hydroxyl- oder OH-Zahl, welche ein Maß für den Gehalt an Hydroxylgruppen ist, und in mg KOH/g angegeben wird;
iii.) bei der Verwendung von Epoxiden, deren Ringöffnung die Ausbildung unterschiedlicher (d. h. primärer oder sekundärer) Hydroxylgruppen zur Folge hat, erfolgt zum einen die Angabe des Anteils der jeweiligen Epoxide im Polyetherpolyol, zum anderen aber auch die Angabe des Anteils primärer beziehungsweise sekundärer Hydroxylgruppen bezogen auf die Gesamtzahl der im Polyetherpolyol vorhandenen Hydroxylgruppen;
iv.) die Molekularmasse (Mₙ oder M_{w}), welches ein Maß für die Länge der Polyoxyalkylen-Ketten der Polyetherpolyole ist.

Die oben genannten Größen können dabei über die folgende Gleichung in Bezug zueinander gesetzt werden: 56.100 = OH-Zahl • (M_{W}/Hydroxyl-Funktionalität).

Beispiele für die Verwendung von Polyetherpolyol-Zusammensetzungen in der Polyurethansynthese finden sich z.B. in WO 01/32736 A1, WO 02/088211 A1, WO 02/077056 A1, WO 01/25305 A1, US 5,420,170, US 6,653,363 B1 und US 6,136,879 A.

Nachteilig an den soeben aufgeführten Beispielen, welche (nahezu) ausschließlich Polyetherpolyole als B-Komponente verwenden, ist, dass zu ihrer Synthese eine große Menge an fossilen Rohstoffen aufgebracht werden muss und diese in Folge dessen einen sehr hohen CO₂-Ausstoß zur Folge haben (zum einen werden die Epoxide aus letzten Endes aus Erdöl erhältlichen Verbindungen, vor allen Dingen Ethen und Propen, hergestellt; zum anderen wird zur Umsetzung von Erdöl zu den benötigten Zwischenprodukten Ethen und Propen eine große Menge an fossilen Rohstoffen verbrannt).

Unter dem Aspekt der Nachhaltigkeit wäre demnach ein vollständiger oder zumindest teilweiser Ersatz der synthetischen Polyetherpolyole durch wesentlich leichter zugängliche Verbindungen und insbesondere durch nachwachsende Rohstoffe, erstrebenswert. Ansatzpunkte zur Erreichung dieses Ziels finden sich z.B. in EP 0826706 A2, DBP 1113810, DE 3708961 C2, DE 3316652 C2, US 4,839,397 und US 2006/0270747 A1, welche hauptsächlich die Verwendung von Rizinusöl als nachwachsendem Rohstoff zur Herstellung verschiedener Polyurethan-Systeme lehren.

Auch im Bereich der viskoelastischen Polyurethanschaumstoffe scheint dieses Konzept allmählich Einzug zu halten, wie WO 2007/085548 A1 zeigt. Gegenstand der darin beschriebenen Erfindung ist ein Verfahren zur Herstellung von offenzelligen viskoelastischen Polyurethan-Weichschaumstoffen auf der Basis von nachwachsenden Rohstoffen durch Umsetzung von
a) Polyisocyanaten mit
b) Einer Polyolmischung bestehend aus
bi) Verbindungen mit mindestens zwei mit Isocyanatgruppen reaktiven Wasserstoffatomen und einer OH-Zahl von 20 bis 100 mg KOH/g und
bii) Verbindungen mit mindestens zwei mit Isocyanatgruppen reaktiven Wasserstoffatomen und einer OH-Zahl von 100 bis 800 mg KOH/g und
biii) Verbindungen mit mindestens einer und höchstens zwei mit Isocyanatgruppen reaktiven Wasserstoffatomen und einer OH-Zahl von 100 bis 800 mg KOH/g und
c) Treibmitteln,
welches dadurch gekennzeichnet ist, dass die Komponenten bi) und bii) jeweils mindestens eine Verbindung enthalten, die nachwachsende Rohstoffe oder deren Umsetzungsprodukte enthält.

Als Verbindung bii) wird ganz bevorzugt Rizinusöl eingesetzt. Als nachteilig an diesem Verfahren ist der Umstand zu sehen, dass die Hauptkomponente, d.h. bi), ein Umsetzungsprodukt eines nachwachsenden Rohstoffes mit Epoxiden ist, im Endeffekt also ebenfalls ein Polyetherpolyol darstellt; insbesondere lässt sich hier nicht ein chemisch ausschließlich unveränderter nachwachsender Rohstoff einsetzen.

Es ist daher Aufgabe der vorliegenden Erfindung eine Polyetherpolyol-Zusammensetzung bereitzustellen, die einen möglichst hohen Anteil eines chemisch (nahezu) unmodifizierten nachwachsenden Rohstoffes enthält und mit der sich Polyurethanschaumstoffe hoher Viskoelastizität herstellen lassen.

In einer ersten Ausführungsform wird die der Erfindung zugrunde liegende Aufgabe gelöst durch eine Polyetherpolyol-Zusammensetzung für die Herstellung von viskoelastischen Polyurethan-Schäumen, welche die folgenden Komponenten umfasst:
(a) ein Polyetherpolyol mit einer Hydroxyl-Funktionalität von 3, einer OH-Zahl in einem Bereich von 210 bis 255mg KOH/g und einem PO-Gehalt in einem Bereich von 90 bis 100 Gew.-%;
(b) ein Polyetherpolyol, dessen Polyol-Startmolekül sich nicht von einem nachwachsenden Rohstoff ableitet, mit einer Hydroxyl-Funktionalität von 2, einer OH-Zahl in einem Bereich von 41 bis 71mg KOH/g und einem PO-Gehalt in einem Bereich von 90 bis 100 Gew.-%;
(c) ein Polyetherpolyol mit einer Hydroxyl-Funktionalität von 2, einer OH-Zahl in einem Bereich von 92 bis 132mg KOH/g und einem PO-Gehalt in einem Bereich von 90 bis 100 Gew.-% und
(d) mindestens einen nachwachsenden Rohstoff mit jeweils mindestens einer freien OH-Gruppe im Rohstoff-Molekül.

Die erfindungsgemäßen Polyetherpolyole werden durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt.

Besonders bevorzugt unter den oben genannten Epoxiden sind Ethylenoxid und Propylenoxid. Ganz besonders bevorzugt sind die verwendeten Polyetherpolyole nur aus Propylenoxid als Epoxid-Komponente aufgebaut.

Die oben für PO angegebenen Gehalte beziehen sich dabei auf die (Gesamt-) Masse der bei der Herstellung der Polyetherpolyole eingebauten Epoxide. Außer Betracht bleibt dabei die Masse der eingesetzten Starter-Moleküle.

Werden mehrere Epoxide zur Synthese der Polyetherpolyole verwendet, so können letztere jede gewünschte Anordnung der Oxyalkyleneinheiten aufweisen. So kann es sich entsprechend um Homopolymere (blei der Verwendung nur eines Epoxids), Copolymere, "random"-Copolymere, "capped"-Polymere oder um Polymere handeln, die mit einem Gemisch verschiedener Epoxide ge-"tipped" sind, um einen gewünschten Gehalt an primären Hydroxylgruppen zu erzielen.

Im Unterschied zu WO 2007/085548 A1 leitet sich das Startermolekül der Komponente (b) der vorliegenden Erfindung nicht von einem nachwachsenden Rohstoff ab.

### Definition 1 (Komponente (d)):

Unter nachwachsenden Rohstoffen im Sinne der vorliegenden Erfindung werden in der Natur vorkommende und in dieser Form auch isolierbare Verbindungen verstanden. (siehe Fortsetzung Definition 1 unten).

### Definition 2 (Komponente (b)):

Sich nicht von einem nachwachsenden Rohstoff ableitend bedeutet im Sinne der vorliegenden Erfindung, dass das Kohlenstoffgerüst des betreffenden nachwachsenden Rohstoffes nicht mehr innerhalb des Polyetherpolyols der Komponente (b) enthalten ist. Dies bedeutet insbesondere, dass besagtes Polyetherpolyol nicht durch zum Beispiel Umsetzung eines nachwachsenden Rohstoffes mit Epoxiden unter Bildung eines Polyetherpolyols erhalten wird.

Beispiele für mögliche nachwachsende Rohstoffe sind Rizinusöl, Polyhydroxyfettsäure, Riziniolsäure, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Nachtkerzenöl, Wildrosenöl, Distelöl, Walnussöl, mit Hydroxylgruppen modifizierte Fettsäuren und Fettsureester auf Basis von Myristoleinsäure, Palmitoleinsäure, Ölsäure, Vaccensäure, Pertoselinsäure, Gadoleinsäure, Erucasäure, Nervonsäure, Linolsäure, - und -Linilensäure, Stearidonsäure, Arachidonsäure, Timnodonsäure, Clupanodonsäure, Cervonsäure.

### Definition 1 (Komponente (d)):

Dabei schließen die oben erwähnten nachwachsenden Rohstoffe auch chemisch modifizierten Verbindungen ein, bei denen allerdings das Kohlenstoffgerüst an sich in seiner Konnektivität unverändert bleibt (z.B. mit Hydroxylgruppen modifizierte nachwachsende Rohstoffe, entstanden z.B. durch Hydroxylierung von Verbindungen oder hydrierte Produkte).

Mögliche Starterverbindungen sind zum Beispiel Dicarbonsäuren, wie Bernsteinsäure, Adipinsäure, Phthalsäure und Terephthalsäure.

Als weitere mögliche Starterverbindungen können beispielsweise auch Ammoniak oder aliphatische und/oder aromatische Amine, die gegebenenfalls substituiert sein können, wie zum Beispiel N-monoalkyl-, N,N-dialkyl- und/oder N,N'-dialkyl-substituierte Diamine verwendet werden. Sie weisen mindestens eine primäre oder sekundäre Aminogruppe auf, wie beispielsweise 1,2-Diaminoethan, Oligomere des 1,2-Diaminoethans (beispielsweise Diethylentriamin, Triethylentetramin oder Pentaethylenhexamin), 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensation von Anilin mit Formaldehyd erhalten werden. Weitere geeignete Startermoleküle sind Alkanolamine, wie beispielsweise Ethanolamin, N-Methyl- und N-Ethylethanolamin, Dialkanolamine, wie beispielsweise Diethanolamin, N-Methyl- und N-Ethyldiethanolamin und Trialkanolamine, wie beispielsweise Triethanolamin.

Weitere geeignete Starterverbindungen sind solche mit zwei oder mehr Hydroxylgruppen, wie beispielsweise Wasser, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerin, Trimethylolpropan, Pentaerythrit, Sorbit und Saccharose, Rizinusöl, modifiziertes Sojaöl. Die Starterverbindungen können allein oder als Gemische verwendet werden.

Bevorzugt liegen die Massenanteile der Komponenten (a) bis (d) (gegebenenfalls unabhängig voneinander) in den folgenden Mengen: (a) 32 bis 54 Gew.-%; (b) 16 bis 27 Gew.-%; (c) 11 bis 19 Gew.-% und (d) 5 bis 50 Gew.-%. Die Angaben in Gew.-% beziehen sich dabei jeweils auf die Gesamtmasse der Polyetherpolyol-Zusammensetzung. Diese Gewichtsanteile sind dabei insofern bevorzugt, als sie eine besonders hohe Viskoelastizität im erfindungsgemäßen Polyurethanschaum zur Folge haben.

Besonders bevorzugt wird bei Komponente (a) ein Triol als Startermolekül verwendet, insbesondere Glycerin. Im Falle der Komponenten (b) und (c) wird bevorzugt ein 1,2-Diol als Startermolekül, insbesondere Propylenglykol, verwendet.

Im Fall der Komponente (d) ist Rizinusöl und/oder Teil- und/oder vollständig hydriertes Rizinusöl als nachwachsender Rohstoff ganz besonders bevorzugt, insbesondere pharmazeutisches raffiniertes Rizinusöl DAB.

Darüber hinaus hat es sich als besonders vorteilhaft erwiesen, wenn die oben beschriebenen Polyetherpolyol-Zusammensetzung neben den Komponenten (a) bis (d) noch eine weitere Komponente (e) enthält, welche ein Polyetherpolyol mit einer Hydroxylfunktionalität von 2, einer OH-Zahl in einem Bereich von 505 bis 525 mgKOH/g und einem PO-Gehalt in einem Bereich von 90 bis 100 Gew.-% ist.

Komponente (e) leitet sich bevorzugt von einem 1,2-Diol als Startmolekül, insbesondere Propylenglykol ab. Bevorzugt liegt der Anteil der Komponente (e) in der Polyetherpolyol-Zusammensetzung in einem Bereich von 1 bis 5 Gew.-%.

In einer zweiten Ausführungsform wird die der Erfindung zugrunde liegende Aufgabe gelöst durch ein Verfahren zur Herstellung eines viskoelastischen Schaumes, dadurch gekennzeichnet, dass man
(a) eine Polyetherpolyol-Zusammensetzung nach einem der Ansprüche 1 bis 12,
(b) eine Polyisocyanat-Komponente
(c) gegebenenfalls Wasser, einen oder mehrere Katalysatoren
unter Zusatz gegebenenfalls weiterer Hilfsstoffe, Füllstoffe und/oder Treibmittel zur Reaktion bringt.

Unter dem Begriff "Wasser" werden erfindungsgemäß in diesem Zusammenhang auch wasserfreisetzende Komplexe, Addukte und Einschlussverbindungen verstanden. Bevorzugt ist in diesem Zusammenhang freies Wasser, welches bezogen auf die Polyetherpolyol-Komponente B in einer Menge in einem Bereich von 0 bis 10 Gew.-%, bevorzug in einer Menge in einem Bereich von 0,5 bis 3 Gew.-% enthalten sein kann.

Als gegebenenfalls mitzuverwendende Treibmittel finden die üblicherweise für das Aufschäumen von Polyurethanschaumstoffen eingesetzten Treibmittel Verwendung. Beispiele für Treibmittel sind Alkane wie n-Pentan, iso-Pentan, Gemische aus iso- und n-Pentan, Cyclopentan, Cyclohexan, Mischungen aus Butanisomeren und den genannten Alkanen, halogenierte Verbindungen wie zum Beispiel Dichlormethan, Dichlormonofluormethan, Difluormethan, Trifluormethan, Difluorethan, 1,1,1,2-Tetrafluroethan, Tetrafluorethan (R 134 und R 134a), 1,1,1,3,3,3-Hexafluorpropan (R 356), 1,1,1,3,3-Pentafluorpropan (R 245fa), Chlordifluorethan, 1,1-Dichlor-2,2,2-Trifluorethan, 2,2-Dichlor-2-fluorethan, Heptafluorpropan und Schwefelhexafluorid und Kohlendioxid.

Bevorzugt werden Kohlendioxid, Cyclopentan, n-Pentan und iso-Pentan einzeln oder als Gemisch, gegebenenfalls in der Abmischung mit Wasser, eingesetzt. Weitere geeignete Treibmittel sind Carbonsäuren wie Ameisensäure, Essigsäure, Oxalsäure und chemische Treibmittel, die im Verlauf des Schäumprozesses Gase freisetzen, wie zum Beispiel Azoverbindungen. Bevorzugt werden diese Treibmittel in Kombination mit Wasser eingesetzt.

Als gegebenenfalls mitzuverwendende Hilfs- und Zusatzstoffe können Paraffine, Paraffinöl, Fettalkohole oder Dimethylpolysiloxane sowie Pigmente oder Farbstoffe, ferner Stabilisatoren gegen Alterungs- und Witterungseinflüsse (wie zum Beispiel Octadecyl-3-(3,5-di-tert-butyl-4-hydroxyphenyl)propionat ; Anilin N-Phenyl-Reaktionsprodukte mit 2,4,4-Trimethylpenten ; Thiodiethylenbis[3-(3,5-di-tert-butyl-4-hydroxyphenyl)propionat] ; Tris-Dipropylenglykolphosphit ; Diisodecylphenylphosphit; 2,6-Di-tertiobutyl-p-kresol), Weichmacher (wie zum Beispiel Dioctylphthalat, Distearylphthalat, Diisodecylphthalat, Dioctyladipat, Trikresylphosphat, Triphenylphosphat und andere) und fungistatisch und bakteriostatisch wirkende Substanzen, sowie Füllstoffe wie Bariumsulfat, Kieselgur, Ruß, Schlämmkreide, Glasfasern, LC-Fasern, Glasflakes, Glaskugeln, Aramid- oder Kohlefasern mitverwendet werden. Weitere Beispiele für mögliche Schaumstabilisatoren, flammhemmende Substanzen, oberflächenaktive Substanzen und Füllstoffe finden sich in US 2002/0165290 A1, und hier insbesondere in den Abschnitten [0033], [0034] und [0058]-[0062].

Die soeben genannten Hilfs- beziehungsweise Zusatzstoffe können sowohl einer als auch mehreren Komponenten zugemischt und auch in ein gegebenenfalls zu verwendendes Formwerkzeug eingelegt werden.

Zur Herstellung der erfindungsgemäßen Schaumstoffe werden gegebenenfalls Katalysatoren verwendet, die die Reaktion zwischen der Polyolkomponente B und der Isocyanatkomponente A beschleunigen. Beispiele für geeignete Katalysatoren sind organische Zinnverbindungen wie Zinn(II)salze organischer Carbonsäuren, zum Beispiel Zinn(II)acetat, Zinn(II)octoat, Zinn(II)ethylhexoat und Zinn(II)laurat und die Dialkylzinn(IV)salze, beispielsweise Dibutlyzinndiacetat, Dibutylzinndilaurat, Dibutlyzinnmaleat und Dioctylzinndiacetat. Weitere Beispiele für geeigenete Katalysatoren sind Amidine, wie zum Beispiel 2,3-Dimethyl-2,4,5,6-tetrahydropyrimidine und Amine wie Triethylamin, Tributylamin, Dimethylcyclohexylamin, Dimethylbenzylamin, Pentamethyldiethylentriamin, N,N,N',N'-Tetramethylbutandiamin und - ethandiamin, N-Methylmorpholin, N-Ethylmorpholin, N-Cyclohexylmorpholin, N,N,N',N'-Tetramethyl-1,6-hexandiamin, Pentamethyldiethylentriamin, Tetramethylguanidin, Tetramethyldiaminoethylether, Bis(dimethylaminopropyl)harnstoff, Dimethylpiperazin, 1,2-Dimethylimidazol, 1-Azabicyclo[3,3,0]octan und vorzugsweise 1,4-Diazabicyclo[2,2,2]octan, Bis(dimethylaminoethyl)ether und Tris(dialkylaminoalkyl)-s-hexahydrotriazin. Bevorzugt enthält die Katalysatorkomponente mindestens ein aliphatisches Amin.

Auch können Aminoalkohole als Katalysatoren verwendet werden. Beispiele sind Triethanolamin, Triisopropanolamin, N-Methyl- und N-Ethyldiethanolamin, und Dimethylethanolamin und Diethanolamine. Bevorzugt ist N-(Dimethylaminoethyl)-N-Methylethanolamin.

Es kann auch eine Kombination mehrerer Katalysatoren verwendet werden.

Bevorzugt wählt man bei dem erfindungsgemäßen Verfahren die Menge der Polyisocyanat-Komponente so aus, dass die Isocyanat-Kennzahl in einem Bereich von 70 bis 120, besonders bevorzugt in einem Bereich von 85 bis 105, liegt, da nur innerhalb dieser engen Bereiche eine sehr gute Viskoelastizität des erhaltenen Schaumstoffes erreicht wird.

Unter Isocyanat-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein.

Eingesetzt werden können in dem erfindungsgemäßen Verfahren neben (d. h. gegebenenfalls im Gemisch mit) "einfachen" Polyisocyanatkomponenten auch solche, die durch eine so genannte Präpolymerisation einfacher Polyisocyanatkomponenten und organischer Verbindungen mit mindestens einer Hydroxylgruppe erhalten wurden. Beispielhaft genannt seien ein bis vier Hydroxylgruppen aufweisende Polyol- oder Polyester mit Molekularmasseen von 60 bis 6500. Ganz bevorzugt setzt man dabei solche Präpolymere ein, die durch Präpolymerisation mit der erfindungsgemäßen Polyetherpolyol-Zusammensetzung erhalten wurden.

Als Polyisocyanatkomponente A werden im erfindungemäßen Verfahren organische Di- oder Polyisocyanate verwendet. Als Di- oder Polyisocyanate kommen aliphatische, cycloaliphatische, araliphatische, aromatische und heterocyclische Polyisocyanate in Frage, wie sie in Justus Liebigs Annalen der Chemie 1949, 562, S. 75-136 beschrieben werden, beispielsweise solche der Formel

Q(NCO)ₙ

in der
n eine ganze Zahl von 2 bis 4, vorzugsweise 2, und
Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 8 bis 15, vorzugsweise 8 bis 13 C-Atomen bedeuten.

Bevorzugt sind Polyisocyanate, wie sie in der DE-OS 28 32 253 beschrieben werden. Besonders bevorzugt eingesetzt werden in der Regel technisch leicht zugänglichen Polyisocyanate, zum Beispiel das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("MDI") und Carbodiimidgruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat beziehungsweise vom 4,4'- und/oder 2,4'-Diphenylmethandiisocyanat ableiten.

Insbesondere als vorteilhaft hat es sich erwiesen, TDI einzusetzen, wobei der Anteil des 2,4-Isomers am gesamten TDI (= Summe der Anteile des 2,4- und des 2,6-Isomers) dabei bevorzugt in einem Bereich von 50 bis 100, besonders bevorzugt in einem Bereich von 60 bis 85 liegt.

Insbesondere TDI und die soeben beschriebenen Gehaltsangaben haben sich dabei im Hinblick auf die viskoelastischen Eigenschaften als besonders vorteilhaft erwiesen.

Die erfindungsgemäßen Polyurethanschaumstoffe sind der oben schon beschriebenen Klasse solcher Schaumstoffe zuzuordnen, deren Viskoelastizität auf den besonderen strukturellen Aufbau der Polyurethan-Komponenten basiert. Es handelt sich also nicht um eine pneumatische-Viskoelastizität.

In einer dritten Ausführungsform wird die der Erfindung zugrundeliegende Aufgabenstellung gelöst durch einen viskoelastischen Schaum, der nach dem oben beschriebenen Verfahren erhältlich ist. Beliebig geformte Körper aus diesem viskoelastischen Schaum können gewissermaßen in situ, zum Beispiel durch Reaktionsspritzguss, oder durch Ausschneiden oder Ausstanzen aus entsprechend hergestellten Polyurethanschaumblöcken hergestellt werden.

In einer vierten Ausführungsform wird die der Erfindung zugrundeliegende Aufgabe gelöst durch die Verwendung eines aus dem erfindungsgemäßen viskoelastischen Schaumstoff bestehenden Körpers in Matratzen, Kissen, Sitzbezügen, Schuhsohlen, Ohrenstöpseln, Schutzkleidung, Schutzausrüstung oder Schallisolierungen.

### Ausführungsbeispiele:

In einer herkömmlichen Blockschaummaschine wurde aus der folgenden Polyetherpolyol-Zusammensetzung

| | |
|---|---|
| Polyol (a) | 42 Gew.-Teile |
| Polyol (b) | 21 Gew.-Teile |
| Polyol (c) | 15 Gew.-Teile |
| Rizinusöl (d) | 20 Gew.-Teile |
| Polyol (e) | 2 Gew.-Teile |
| unter Zusatz von 1,36 Gew.-Teilen Wasser, | |
| unter Zusatz der folgenden Hilfsstoffe | |
| Tegostab^{®} BF2370 | 0,60 Gew.-Teile |
| Katalysator Addocat^{®} 108 | 0,155 Gew.-Teile |
| Katalysator Addocat^{®} 105 | 0,50 Gew.-Teile |
| Harnstoff | 0,30 Gew.-Teile |
| und unter Verwendung von | |
| Desmodur^{®} T65 | 37,3 Gew.-Teile |

als Polyisocyanat-Komponente ein erfindungsgemäßer Polyurethan-Schaumstoff hergestellt, der die folgenden physikalischen Eigenschaften aufwies:

| | |
|---|---|
| Rohdichte (n. DIN EN ISO 3386-1-98) | 58,5 kgm⁻³ |
| Zugfestigkeit (n. DIN EN ISO 1798): | 59 kPa |
| Bruchdehnung (n. DIN EN ISO 1798): | 218% |
| Stauchhärte 40% (4. Belastung): | 1,63 kPa |
| Stauchhärte 40% (37 °C, 1. Belastung): | 2,26 kPa |
| Wet Compression Set (n. DIN EN ISO 1856-96): | |
| 22 h; 40 °C ; 95% LF: | 6,9% |
| Rückprallelastizität : | 4% |

Das Polyol (a) war ein Polyetherpolyol mit einer OH-Zahl von 233 und einem PO-Gehalt von 100%. Als Starter Molekül zur Herstellung von Polyol (a) wurde Glycerin verwendet.

Das Polyol (b) war ein Polyetherpolyol mit einer OH-Zahl von 56 und einem PO-Gehalt von 100%. Als Starter Molekül zur Herstellung von Polyol (b) wurde Propylenglycol verwendet.

Das Polyol (c) war ein Polyetherpolyol mit einer OH-Zahl von 112 und einem PO-Gehalt von 100%. Als Starter Molekül zur Herstellung von Polyol (c) wurde Propylenglycol verwendet.

Das Polyol (e) war ein Polyetherpolyol mit einer OH-Zahl von 512 und einem PO-Gehalt von 100%. Als Starter Molekül zur Herstellung von Polyol (e) wurde Propylenglycol verwendet.

Als nachwachsender Rohstoff (d) wurde pharmazeutisch raffiniertes Rizinusöl DAB verwendet. Dieses wurde von der Alberdingk Boley GmbH bezogen.

Die Polyole (a), (b), (c) und (e) und die Desmodur^{®} Isocyanate wurden von der Bayer MaterialScience AG, der Tegostab^{®} Stabilisator von der Evonik Goldschmidt GmbH und die Addocat^{®} Katalysatoren von der Rhein Chemie Rheinau GmbH bezogen.
Der verwendete Harnstoff besaß einen technischen Reinheitsgrad.

## Patentansprüche

1. Polyetherpolyol-Zusammensetzung für die Herstellung von viskoelastischen Polyurethan-schäumen, umfassend:
(a) ein Polyetherpolyol mit einer Hydroxyl-Funktionalität von 3, einer OH-Zahl in einem Bereich von 210 bis 255 mg KOH/g und einem PO-Gehalt in einem Bereich von 90 bis 100 Gew.-%;
(b) ein Polyetherpolyol, dessen Polyol-Startmolekül sich nicht von einem nachwachsenden Rohstoff ableitet, mit einer Hydroxyl-Funktionalität von 2, einer OH-Zahl in einem Bereich von 41 bis 71mg KOH/g und einem PO-Gehalt in einem Bereich von 90 bis 100 Gew.-%;
(c) ein Polyetherpolyol mit einer Hydroxyl-Funktionalität von 2, einer OH-Zahl in einem Bereich von 92 bis 132 mg KOH/g und einem PO-Gehalt in einem Bereich von 90 bis 100 Gew.-% und
(d) mindestens einen nachwachsenden Rohstoff mit jeweils mindestens einer freien OH-Gruppe im Rohstoff-Molekül, wobei die Komponenten (d) und (b) wie in der Beschreibung definiert sind (Definitionen 1 und 2).

2. Zusammensetzung nach Anspruch 1, **dadurch gekennzeichnet, dass** der Anteil der Komponente (a) in der Polyetherpolyol-Zusammensetzung in einem Bereich von 32 bis 54 Gew.-% liegt oder der Anteil der Komponente (b) in der Polyetherpolyol-Zusammensetzung in einem Bereich von 16 bis 27 Gew.-% liegt.

3. Zusammensetzung nach einem der Ansprüche 1 oder 2, **dadurch gekennzeichnet, dass** der Anteil der Komponente (c) in der Polyetherpolyol-Zusammensetzung in einem Bereich von 11 bis 19 Gew.-% liegt oder der Anteil der Komponente (d) in der Polyetherpolyol-Zusammensetzung in einem Bereich von 5 bis 50 Gew.-% liegt.

4. Zusammensetzung nach einem der Ansprüche 1 bis 3, **dadurch gekennzeichnet, dass** sich das Polyetherpolyol der Komponente (a) von Glycerin als Startmolekül ableitet und/oder sich das Polyetherpolyol der Komponente (b) und/oder das Polyetherpolyol der Komponente (c) von Propylenglykol als Startmolekül ableitet.

5. Zusammensetzung nach einem der Ansprüche 1 bis 4, **dadurch gekennzeichnet, dass** der nachwachsende Rohstoff der Komponente (d) Rizinusöl und/oder teil- und/oder vollständig hydriertes Rizinusöl enthält.

6. Zusammensetzung nach einem der Ansprüche 1 bis 5, **dadurch gekennzeichnet, dass** sie als eine weitere Komponente (e) ein Polyetherpolyol mit einer Hydroxyl-Funktionalität von 2, einer OH-Zahl in einem Bereich von 450 bis 550mg KOH/g und einem PO-Gehalt in einem Bereich von 90 bis 100 Gew.-% umfasst.

7. Zusammensetzung nach Anspruch 6, **dadurch gekennzeichnet, dass** sich das Polyetherpolyol der Komponente (e) von Propylenglykol als Startmolekül ableitet.

8. Zusammensetzung nach einem der Ansprüche 6 oder 7, **dadurch gekennzeichnet, dass** der Anteil der Komponente (e) in der Polyetherpolyol-Zusammensetzung in einem Bereich von 1 bis 5 Gew.-% liegt.

9. Verfahren zur Herstellung eines viskoelastischen Schaumes, **dadurch gekennzeichnet, dass** man
(a) eine Polyetherpolyol-Zusammensetzung nach einem der Ansprüche 1 bis **8**,
(b) eine Polyisocyanat-Komponente
(c) gegebenenfalls Wasser, einen oder mehrere Katalysatoren unter Zusatz gegebenenfalls weiterer Hilfsstoffe, Füllstoffe und/oder Treibmittel zur Reaktion bringt.

10. Verfahren nach Anspruch 9, **dadurch gekennzeichnet, dass** man die Menge der Polyisocyanat-Komponente so auswählt, dass die Isocyanat-Kennzahl in einem Bereich von 70 bis 120, bevorzugt in einem Bereich von 85 bis 105, liegt.

11. Verfahren nach einem der Ansprüche 9 oder 10, **dadurch gekennzeichnet, dass** man eine durch eine Präpolymerisation erhalte Polyisocyanat-Komponente einsetzt.

12. Verfahren nach Anspruch 11, **dadurch gekennzeichnet, dass** man eine Polyetherpolyol-Zusammensetzung nach einem der Ansprüche 1 bis 8 bei der Präpolymerisation einsetzt.

13. Viskoelastischer Schaum erhältlich nach einem der Ansprüche 9 bis 12.

14. Geformter Körper, umfassend den viskoelastischen Schaum nach Anspruch 13.

15. Verwendung eines geformten Körpers nach Anspruch 14 in Matratzen, Kissen, Sitzbezügen, Schuhsolen, Ohrenstöpseln, Schutzkleidung, Schutzausrüstung oder Schallisolierungen.

## Claims

1. A polyether polyol composition for the preparation of visco-elastic polyurethane foams, comprising:
(a) a polyether polyol having a hydroxyl functionality of 3, an OH number within a range of from 210 to 255 mg of KOH/g and a PO content within a range of from 90 to 100% by weight;
(b) a polyether polyol whose polyol starting molecule is not derived from a renewable raw material, having a hydroxyl functionality of 2, an OH number within a range of from 41 to 71 mg of KOH/g and a PO content within a range of from 90 to 100% by weight;
(c) a polyether polyol having a hydroxyl functionality of 2, an OH number within a range of from 92 to 132 mg of KOH/g and a PO content within a range of from 90 to 100% by weight; and
(d) at least one renewable raw material each having at least one free OH group per molecule of raw material, wherein components (d) and (b) are as defined in the description (definitions 1 and 2).

2. The composition according to claim 1, **characterized in that** the proportion of component (a) in said polyether polyol composition is within a range of from 32 to 54% by weight or the proportion of component (b) in said polyether polyol composition is within a range of from 16 to 27% by weight.

3. The composition according to either of claims 1 and 2, **characterized in that** the proportion of component (c) in said polyether polyol composition is within a range of from 11 to 19% by weight or the proportion of component (d) in said polyether polyol composition is within a range of from 5 to 50% by weight.

4. The composition according to any of claims 1 to 3, **characterized in that** the polyether polyol of component (a) is derived from glycerol as the starter molecule and/or the polyether polyol of component (b) and/or the polyether polyol of component (c) is derived from propylene glycol as the starter molecule.

5. The composition according to any of claims 1 to 4, **characterized in that** the renewable raw material of component (d) contains castor oil and/or partially and/or completely hydrogenated castor oil.

6. The composition according to any of claims 1 to 5, **characterized by** comprising a polyether polyol having a hydroxyl functionality of 2, an OH number within a range of from 450 to 550 mg of KOH/g and a PO content within a range of from 90 to 100% by weight as a further component (e).

7. The composition according to claim 6, **characterized in that** the polyether polyol of component (e) is derived from propylene glycol as the starter molecule.

8. The composition according to either of claims 6 or 7, **characterized in that** the proportion of component (e) in said polyether polyol composition is within a range of from 1 to 5% by weight.

9. A process for preparing a visco-elastic foam **characterized in that**
(a) a polyether polyol composition according to any of claims 1 to 8;
(b) a polyisocyanate component;
(c) and optionally water, one or more catalysts; are reacted optionally with the addition of further auxiliaries, fillers and/or foaming agents.

10. The process according to claim 9, **characterized in that** the amount of polyisocyanate component is selected to have an isocyanate characteristic number within a range of from 70 to 120, preferably within a range of from 85 to 105.

11. The process according to either of claims 9 or 10, **characterized in that** a polyisocyanate component obtained by prepolymerization is employed.

12. The process according to claim 11, **characterized in that** a polyether polyol composition according to any of claims 1 to 8 is employed in said prepolymerization.

13. A visco-elastic foam obtainable according to any of claims 9 to 12.

14. A shaped body, comprising the visco-elastic foam according to claim 13.

15. Use of a shaped body according to claim 14 in mattresses, pillows, seat covers, soles of shoes, earplugs, protective clothing, protective equipment or sound insulations.

## Revendications

1. Composition de polyéther-polyol pour la fabrication de mousses de polyuréthane viscoélastiques, comprenant :
(a) un polyéther-polyol ayant une fonctionnalité hydroxyle de 3, un indice OH dans une plage allant de 210 à 255 mg KOH/g et une teneur en PO dans une plage allant de 90 à 100 % en poids ;
(b) un polyéther-polyol dont la molécule de départ polyol ne dérive pas d'une matière première renouvelable, ayant une fonctionnalité hydroxyle de 2, un indice OH dans une plage allant de 41 à 71 mg KOH/g et une teneur en PO dans une plage allant de 90 à 100 % en poids ;
(c) un polyéther-polyol ayant une fonctionnalité hydroxyle de 2, un indice OH dans une plage allant de 92 à 132 mg KOH/g et une teneur en PO dans une plage allant de 90 à 100 % en poids ; et
(d) au moins une matière première renouvelable comprenant à chaque fois au moins un groupe OH libre dans la molécule de matière première,
les composants (d) et (b) étant tels que définis dans la description (définitions 1 et 2).

2. Composition selon la revendication 1, **caractérisée en ce que** la proportion du composant (a) dans la composition de polyéther-polyol se situe dans une plage allant de 32 à 54 % en poids ou la proportion du composant (b) dans la composition de polyéther-polyol se situe dans une plage allant de 16 à 27 % en poids.

3. Composition selon l'un quelconque des revendications 1 ou 2, **caractérisée en ce que** la proportion du composant (c) dans la composition de polyéther-polyol se situe dans une plage allant de 11 à 19 % en poids ou la proportion du composant (d) dans la composition de polyéther-polyol se situe dans une plage allant de 5 à 50 % en poids.

4. Composition selon l'un quelconque des revendications 1 à 3, **caractérisée en ce que** le polyéther-polyol du composant (a) dérive de glycérine en tant que molécule de départ et/ou le polyéther-polyol du composant (b) et/ou le polyéther-polyol du composant (c) dérivent de propylène glycol en tant que molécule de départ.

5. Composition selon l'un quelconque des revendications 1 à 4, **caractérisée en ce que** la matière première renouvelable du composant (d) contient de l'huile de ricin et/ou de l'huile de ricin partiellement et/ou complètement hydrogénée.

6. Composition selon l'un quelconque des revendications 1 à 5, **caractérisée en ce qu'**elle comprend en tant que composant supplémentaire (e) un polyéther-polyol ayant une fonctionnalité hydroxy de 2, un indice OH dans une plage allant de 450 à 550 mg KOH/g et une teneur en PO dans une plage allant de 90 à 100 % en poids.

7. Composition selon la revendication 6, **caractérisée en ce que** le polyéther-polyol du composant (e) dérive de propylène glycol en tant que molécule de départ.

8. Composition selon l'un quelconque des revendications 6 ou 7, **caractérisée en ce que** la proportion du composant (e) dans la composition de polyéther-polyol se situe dans une plage allant de 1 à 5 % en poids.

9. Procédé de fabrication d'une mousse viscoélastique, **caractérisé en ce que**
(a) une composition de polyéther-polyol selon l'une quelconque des revendications 1 à 8,
(b) un composant polyisocyanate,
(c) éventuellement de l'eau, un ou plusieurs catalyseurs
sont mis en réaction, éventuellement avec ajout d'adjuvants supplémentaires, de charges et/ou d'agents gonflants.

10. Procédé selon la revendication 9, **caractérisé en ce que** la quantité du composant polyisocyanate est choisie pour que l'indice d'isocyanate se situe dans une plage allant de 70 à 120, de préférence dans une plage allant de 85 à 105.

11. Procédé selon l'une quelconque des revendications 9 ou 10, **caractérisé en ce qu'**un composant polyisocyanate obtenu par une pré-polymérisation est utilisé.

12. Procédé selon la revendication 11, **caractérisé en ce qu'**une composition de polyéther-polyol selon l'une quelconque des revendications 1 à 8 est utilisée lors de la pré-polymérisation.

13. Mousse viscoélastique pouvant être obtenue selon l'une quelconque des revendications 9 à 12.

14. Corps moulé, comprenant la mousse viscoélastique selon la revendication 13.

15. Utilisation d'un corps moulé selon la revendication 14 dans des matelas, des coussins, des garnitures de sièges, des semelles de chaussures, des bouchons d'oreilles, des vêtements de protection, des équipements de protection ou des isolations acoustiques.
